# EUROPEAN PATENT SPECIFICATION

(11) **EP 2 035 256 B1**
(45) Date of publication and mention of the grant of the patent: **01.12.2010**
(21) Application number: 07788714.9
(22) Date of filing: 15.06.2007
(51) Int. Cl.: B60P 1/16, B60P 1/28

(54) **CONTROL DEVICE OF A DEMOUNTABLE OF A VEHICLE AND ITS USE, ARRANGEMENT AND METHOD FOR CONTROLLING A DEMOUNTABLE OF A VEHICLE**
STEUERVORRICHTUNG FÜR EIN AUSBAUTEIL EINES FAHRZEUGS UND IHRE VERWENDUNG, ANORDNUNG UND VERFAHREN ZUR STEUERUNG EINES AUSBAUTEILS EINES FAHRZEUGS
DISPOSITIF DE COMMANDE D'UN ELEMENT DEMONTABLE D'UN VEHICULE ET SON UTILISATION, AGENCEMENT ET PROCEDE POUR COMMANDER UN ELEMENT DEMONTABLE D'UN VEHICULE

(30) Priority: 16.06.2006 FI 20060600
(43) Date of publication of application: 18.03.2009
(73) Proprietor: Cargotec Finland Oy, 21201 Raisio (FI)
(72) Inventor: MYLLÄRI, Esa, 20300 Turku (FI); PERE, Juha, 21200 Raisio (FI)
(74) Representative: Suominen, Kaisa Liisa
(86) International application number: PCT/FI2007/000172
(87) International publication number: WO 2007/144457

(56) References cited:
- DE-A1- 2 060 281
- JP-A- 56 112 334
- JP-A- 56 120 419
- JP-A- 60 169 339
- US-A- 2 691 080

## Description

### TECHNICAL FIELD RELATED TO THE INVENTION

The invention relates to an arrangement and method for controlling a demountable of a vehicle according to the preambles of the independent claims presented below.

### PRIOR ART

Stick controls, i.e. joysticks, have been known to be used in the controlling of among other airplanes and working machines and when playing video games.

The functions of vehicles, working machines and their accessories have in addition to stick controls also been controlled with press-button controls. Generally only one function can be controlled with one stick control or press-button control, or two functions with the cross axes of the stick control. If the controlling of several functions is desired, several buttons or additional switches are needed, whereby the device easily becomes complicated, difficult to use and expensive.

Document JP 56 112334 discloses a stick control for controlling the operation of hinge parts installed at four corners on a lower surface of a packing box. Through the proper operation of the stick control, the packing box can be dumped rearward, rightward or leftward.

Document US 2,691,080 discloses a control system for hoists. The control system comprises a guide member having an H-shaped slot system, and a control lever mounted for movement through the cross slot and along the side slots of the slot system. The control system also comprises actuating levers which are rotatable with the control lever when the control lever is moved along one of the side slots.

### PURPOSE AND DESCRIPTION OF THE INVENTION

It is an object of this invention to reduce or even completely eliminate above-mentioned problems appearing in the prior art.

It is especially an object of this invention to provide a simple, inexpensive and easy-to-use arrangement with a control device.

It is also an object of this invention to provide an arrangement with a control device, with the aid of which the controlling of an accessory of a vehicle can be made easier than before.

Among other things in order to attain the purposes mentioned above the arrangement and method for controlling a demountable of a vehicle according to the invention are characterised in what is presented in the characterising parts of the enclosed independent claims.

The embodiments mentioned in this text relate, where applicable, to both the control device of a demountable of a vehicle, to its use, the arrangement and the method for controlling a demountable of a vehicle, even though this is not always specifically pointed out.

Now it has surprisingly been contrived that by arranging into the control device of a demountable of a vehicle one main track and at least two cross tracks, which cross the main track, along which tracks the control member can be moved, at least two separate functions of a demountable can be controlled with one control device, which has only one control member.

A typical control device of a demountable of a vehicle comprises a frame, a control member attached in a moveable way in connection to the frame, and means for converting the position of the control member into a control signal. The control device comprises one main track, and at least two cross tracks, which cross the main track. The control member is moveable along the main track and the cross tracks. Each cross track is arranged to control a separate function of the demountable.

A typical arrangement according to the invention comprises a demountable of a vehicle and a control device of a demountable as presented above.

According to a preferred embodiment the control device as presented above can be used, in addition to the demountable, to control also some other accessory of a vehicle. By an accessory of a vehicle is meant for example hydraulic accessories, such as demountables or tail lifts or smaller accessories, which can also be electrically operated such as side valance systems. Thereby the embodiments mentioned in this text relate, where applicable, in addition to a demountable, also to the controlling of other accessories of a vehicle.

The control system according to an embodiment comprises, in addition to the control device as presented above, means for transmitting the control signal to the device to be controlled. According to a preferred embodiment the system also comprises means for receiving the control signal in the device to be controlled.

In a typical method according to the invention for controlling a demountable of a vehicle with a control device the control member, which is attached in a moveable way to the control device, is moved and the position of the control member is converted into a control signal. In the method the control member is moved along the main track, and additionally along at least two cross tracks, which cross tracks cross the main track. In the method each cross track is used to control separate functions of the demountable.

With the aid of the different tracks one control device can be used to control several functions with one single control member. If there are for example three cross tracks, each track can be used to control a separate function by moving the control member on the main track to the desired cross track, wherefrom the control member can be moved along the cross track in question. Each cross track in a way corresponds to a separate uniaxial control device. There can also be for example four, five or more cross tracks.

By a demountable is meant a device according to prior art meant for handling a demountable platform or similar of a vehicle, e.g. a truck, with the help of which device the demountable platform can be e.g. tipped or lifted from the ground onto the vehicle and lowered back to the ground. For example prior art hook devices, cable devices and pivot tippers are demountables.

A hook device, i.e. a hook demountable generally comprises at least one main cylinder and generally also an intermediate frame, and a hook frame, which functions as a telescope-like or pivoted extension of the intermediate frame, which frames are moveable with the aid of the main cylinder, and furthermore a rear frame.

A cable device generally comprises at least one main cylinder and a tipping frame, and a hydraulic motor attached thereto, which are moveable with the aid of the main cylinder, which motor by means of cables lifts the platform onto the vehicle.

A pivot tipping device generally comprises at least one main cylinder and generally also crane beams and additional beams, which function as telescope-like or pivoted extensions of the crane beams, which beams are moveable with the aid of the main cylinder, and furthermore an actual frame.

According to the invention, when controlling the activity of the hook device on different cross tracks, the controlled functions are selected from a group, which comprises
- the movement of the main cylinder,
- the horizontal displacement of the hook frame, which horizontal displacement comprises for example
   - the movement of the hooking cylinder, and
   - the movement of the sliding cylinder, and
- an automated run, which performs in the first part of the cycle at first the horizontal displacement of the hook frame and then the movement of the main cylinder and in the second part of the cycle at first the movement of the main cylinder and then the horizontal displacement.

When controlling the activity of the cable device on different cross tracks, the controlled functions are selected from a group, which comprises
- the movement of the main cylinder,
- the activity of the hydraulic motor for providing the reeling movement of the cables
- the movements required for locking
- movements required by the accessories.

When controlling the activity of the pivot tipper on different cross tracks, the controlled functions are selected from a group, which comprises
- the movement of the main cylinder,
- the movement of the telescopic parts of the crane beams
- the movements of the bearer feet.

According to an embodiment the control device comprises two cross tracks, the first of which is arranged to control one or more main cylinders of the demountable and the second to control the horizontal displacement of the hook device, the hydraulic motor of the cable device or the movement of the telescopic parts of the crane beams of the pivot tipping device. According to an embodiment the control device comprises three cross tracks, whereby the third track can be arranged to control for example the automated run of the hook device, the locking or accessories of the cable device, or the bearer feet of the pivot tipper.

In the method according to the invention the above-mentioned functions are controlled with said cross tracks.

When it is said in this application that some function is controlled with some track, it means that the function in question is controlled by moving the control member on the track in question.

There can be more than one main cylinder in the demountable, e.g. two or three, wherefore by the controlling of the movement of the main cylinder it is meant the controlling of at least one main cylinder and its movement.

The control member, which is attached moveably in connection to the frame of the control device, can be any member suitable for this purpose, which can be arranged in connection with the frame of the control device so that it can be moved. It can for instance be a stick, pin, peg or roll, such as a thumb wheel or a roll similar to the central roll of a mouse. According to an embodiment the control member, such as the stick or a part of it, is moved along the tracks by turning in a way where its base is attached moveably, for example in a pivoted manner to a supporting point. According to another embodiment the control member is attached to the control device in a sliding manner and it can be moved along the tracks in the direction of the surface of the control device. According to an embodiment the control member is a roll, which can for example be glided along the main track and revolved around its axis by the cross tracks so that the circle of the roll moves in the direction of the cross track and also at least a short way along it. According to an especially preferred embodiment the tracks are predetermined and the control member can be moved only along them. By moving of the control member along the track it is meant that the entire control device or a part of it is moved along the track. According to an embodiment the frame of the control device has been equipped with grooves, along which the main and/or cross tracks run.

The position of the control member, such as the stick or the like, can be converted into a control signal using known means, for example optically, with the aid of a potentiometer, inductively, with a Hall sensor or a pulse sensor.

From the control device the control signal is transmitted to the device to be controlled for example directly along wires or by converting the signal into digital messages, which the electronic control unit converts into a form suitable for the device to be controlled, or the signals can also be processed wirelessly. In an embodiment the transmission of the control signal takes place with the aid of a radio transmitter and receiver. The control device may thus be a so-called wireless one.

According to a preferred embodiment the size of the control device is such that it can be held in one hand and at the same time it is easy to move the control member with the thumb or some other finger of the same hand.

According to an embodiment the cross tracks, along which the control member can be moved, such as moved, turned or rolled, are amongst each other substantially in the same direction.

According to an embodiment the cross tracks are substantially straight, and according to another embodiment they are curved.

According to an embodiment the main track is substantially straight, and according to another embodiment it is curved for example in the shape of a circular arc or a part of one.

According to an embodiment the top surface of the control device is curved.

According to an embodiment the main track and the cross tracks are situated substantially on the same level.

With the curvedness or straightness of the tracks and also of the top surface of the control device it is possible to affect the ease of use and the ergonomics. In certain control models a curved top surface and track or tracks improve the ergonomics of the control device.

According to an embodiment the cross tracks cross the main track at an angle of at least 10 degrees, i.e. they are at the point of intersection in a different direction than the main track at the same location. According to an embodiment the cross tracks are substantially perpendicular against the main track, i.e. they cross the main track at an angle of approximately 90 degrees. According to another embodiment the angles can be arranged between 45 and 135 degrees.

According to a preferred embodiment the control member is arranged, when released, to stay in the intersections between the main track and the cross tracks, nonetheless in one location at a time, without returning on its own to another location on the main track. From said locations on the main track the control member can be moved along the cross track in the location in question. According to an embodiment the intersections are provided with clear notches, wherein the control member stays, if it is not purposely turned or moved to another position.

According to an embodiment the control member is arranged to return on its own to the intersection between a cross track and the main track, when it is released on some cross track.

According to another embodiment the control member is arranged, when released, to return to a neutral position, for example to the midpoint of the main track.

According to an embodiment the strength of the control signal depends on how much the control member is moved or turned on the cross track away from the main track. For example when the control member is turned or moved on the cross track as much as possible, the function of the device to be controlled happens as strongly as possible or with the highest possible velocity, and with a smaller movement of the control member the controlled function happens in a weaker or slower manner. According to another embodiment the signal is of an on-off type, i.e. when moving the control member either a control signal of a standard magnitude or a zero signal is sent to the controlled device.

An advantage of the invention, as defined in the independent claims, is that with the aid of it a simple, inexpensive and easy-to-use arrangement with a control device of a demountable of a vehicle can be provided.

By means of the invention an arrangement with a control device is provided, with the aid of which the controlling of a demountable of a vehicle is easier than before.

### BRIEF DESCRIPTION OF THE FIGURES

The invention is described in more detail below with reference to the enclosed schematic drawing, in which
- Figure 1: shows a prior art press-button control,
- Figure 2: shows a prior art uniaxial stick control,
- Figure 3a: shows a perspective view of a control device according to a first embodiment and figure 3b shows the same device seen from the direction of its top surface,
- Figure 4a: shows a perspective view of a control device according to a second embodiment and figure 4b shows the same device seen from the direction of its top surface,
- Figure 5a: shows a perspective view of a control device according to a third embodiment and figure 5b shows the same device seen from the direction of its top surface, and
- Figure 6: shows a vehicle, which has an arrangement according to the invention.

### DETAILED DESCRIPTION OF THE EXAMPLES OF THE FIGURES

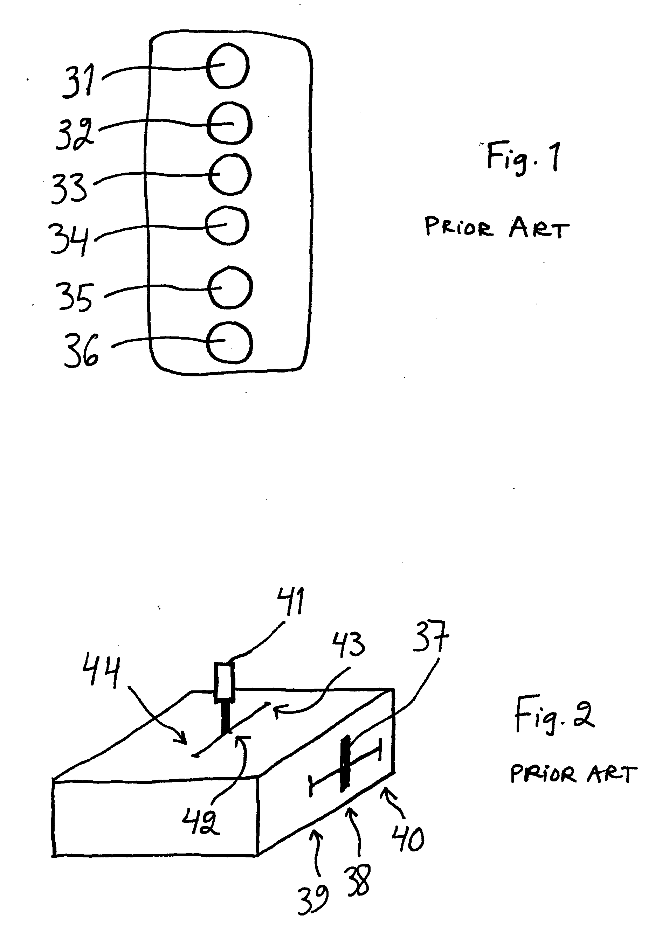

Figure 1 shows a prior art press-button control, with which for example an accessory, such as a hook device, cable device, pivot tipping device or tail lift of a vehicle can be controlled. When controlling a hook device the two top buttons 31, 32 are used to control for example the sliding horizontal displacement, the two middle buttons 33, 34 for example the main cylinder and the two bottom buttons 35, 36 for example the bending or the automated run, which performs in the first part of the cycle at first the horizontal displacement and then the movement of the main cylinder and in the second part of the cycle at first the movement of the main cylinder and then the horizontal displacement of the hook frame.

Figure 2 shows a prior art uniaxial stick control. The control has a selection switch 37, which can be set in three different positions, i.e. middle 38, left 39 or right 40 and thereby choose the controlling of which function is desired, for example the sliding horizontal displacement, main cylinder or bending. With the actual control stick 41 the selected function can be controlled in two different directions, for instance up and down or forward and backwards, by turning the control stick from its neutral position 42 in the middle forward 43 or backwards 44.

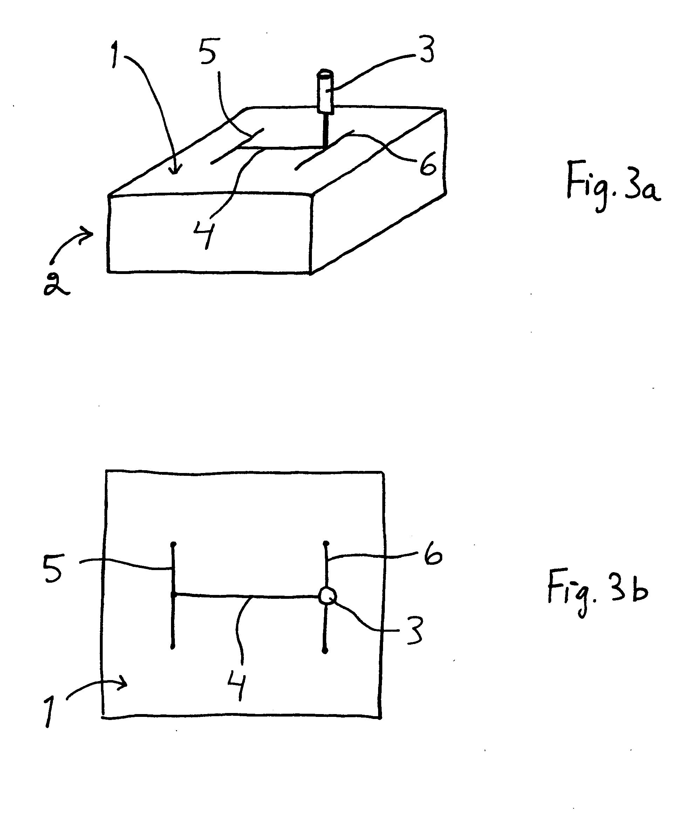

Figure 3a shows a perspective view of a control device according to a first embodiment and figure 3b shows the same device seen from the direction of its top surface 1. The control device comprises a frame 2 and a control member 3 attached moveably in connection to the frame, which control member in this example is a stick. The device comprises in its first direction one predetermined main track 4 and two predetermined cross tracks 5, 6, which cross the main track 4. The control member 3 can be moved only along the tracks 4, 5, 6.

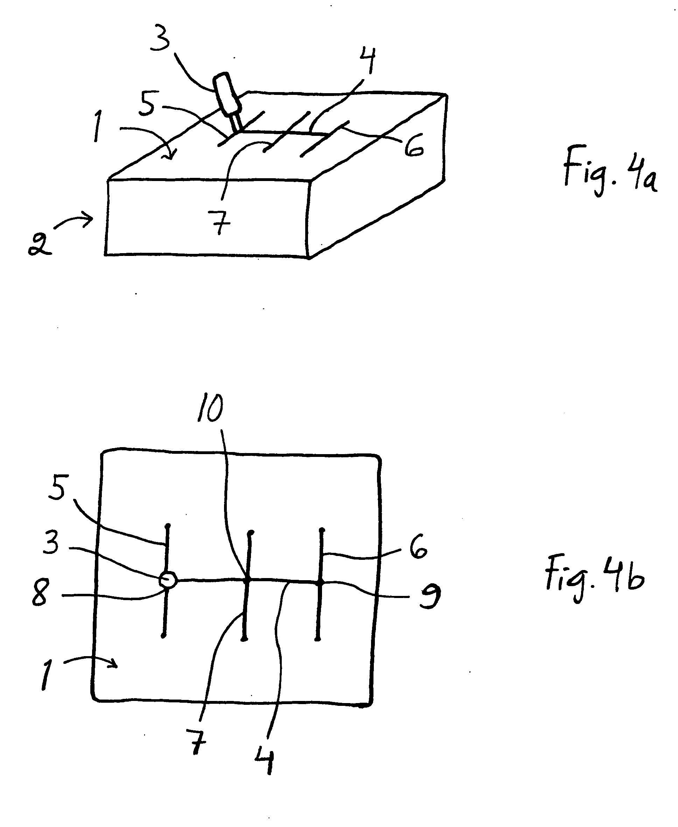

Figure 4a shows a perspective view of a control device according to a second embodiment and figure 4b shows the same device seen from the direction of its top surface 1. The device has a main track 4 running in the first direction and three cross tracks 5, 6, 7. The main track 4 and the cross tracks 5, 6, 7 are substantially straight. The cross tracks 5, 6, 7 are amongst each other in the same direction and substantially perpendicular against the main track, i.e. they cross the main track at an angle of about 90 degrees. The tracks 4, 5, 6, 7 are situated substantially on the same level, i.e. on the level of the top surface 1 of the control device. The main track 4 has three intersections 8, 9, 10 with the cross tracks 5, 6, 7. When the control member 3 is released, it stays in place at the intersection between the main track 4 and the cross track, to which it has most recently been turned, unless it is purposely moved to another position, for example by turning manually. In the situation in the figure the control member 3 is turned into the intersection 8 between the main track 4 and the left-hand cross track 5. From the intersection 8 in question the control member 3 can be moved forward and backwards along the cross track 5 situated in the same location. The control member can also be moved to the two other intersections 9, 10, where it stays in place without returning on its own to another location on the main track.

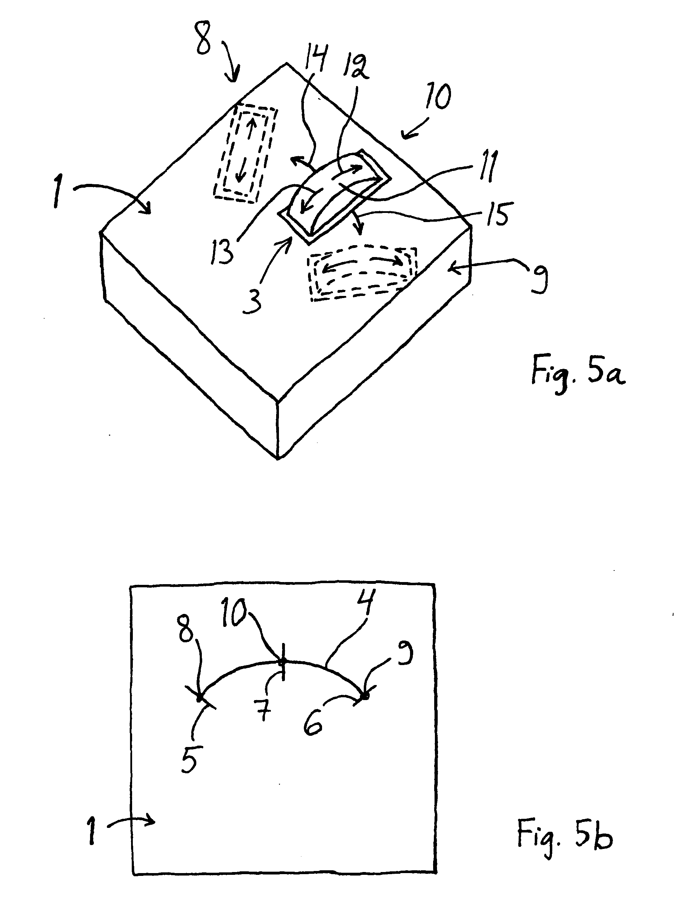

Figure 5a shows a perspective view of a control device according to a third embodiment and figure 5b shows the same device seen from the direction of its top surface 1. The control member 3 is a roll, which can be moved on the curved main track 4 between three different positions, i.e. intersections 8, 9, 10. In figure 5a the roll is in the middle one 10 of the three intersections. Thence it can be moved to the two other intersections 8, 9 in accordance with the arrows 14, 15. The control member is shown in the two other intersections 8, 9 by dashed lines. In each of the three intersections 8, 9, 10 the roll 3 can be rolled in the direction of the cross track 5, 6, 7, i.e. the contact surface 11 of the roll 3 can be moved in the direction of the cross track 5, 6, 7 in two different directions, which directions are at the middle intersection 7 marked by arrows 12 and 13 and in the two other locations by unnumbered arrows. The cross tracks 5, 6, 7 are approximately perpendicular in relation to the curved main track 4.

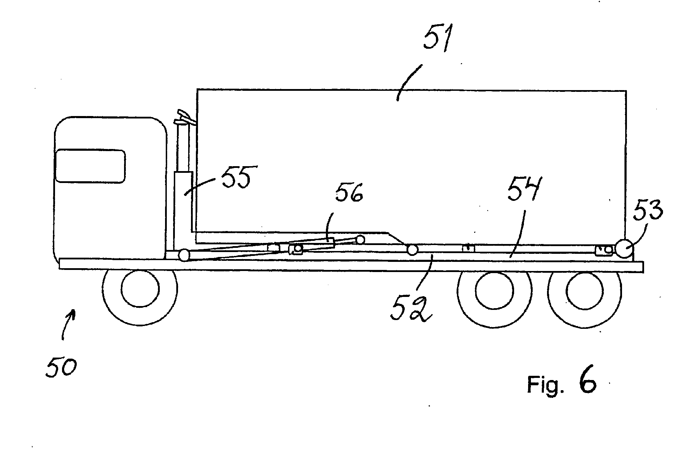

Figure 6 shows a vehicle 50 and a demountable platform 51, the movements of which are controlled using an apparatus according to the invention. The figure shows the frame 52 of the hook apparatus, to which has been attached in a turnable manner a turning frame part 54 via a tipping hinge 53. To the frame part 54 is attached a hook frame 55 in a moveable manner. Using the main cylinder 56 the turning frame part 54 of the hook demountable and with it the hook frame 55 can be turned in relation to the tipping hinge 53. The hook frame 55 can be moved in relation to the frame part 54 by means of a hydraulic cylinder (not shown). The activity of the hook device of figure 6 can be controlled for example using the control device shown in figures 4a and 4b for example as follows: the activity of the main cylinder 56 is controlled by turning the control member 3 on the cross track 5, the movement of the hook frame 55 in relation to the frame part 54 is controlled by turning the control member 3 on the cross track 6 and the automated run of the apparatus is controlled by turning the control member 3 on the cross track 7.

The same reference numbers are used in different figures for similar parts to facilitate readability even though the parts do not always correspond to each other.

## Claims

1. An arrangement, which comprises a demountable of a vehicle and a control device of a demountable of a vehicle, which device comprises
- a frame (2),
- a control member (3), attached in a moveable way in connection to the frame,
- means for converting the position of the control member into a control signal,
- one main track (4), and
- at least two cross tracks (5, 6, 7), which cross the main track, each cross track being arranged to control a separate function of the demountable,
along which tracks (4, 5, 6, 7) the control member is moveable, **characterized in that** the demountable is a hook device and that said functions to be controlled comprise
- the movement of the main cylinder,
- the horizontal displacement, which horizontal displacement comprises for example
- the movement of the hooking cylinder, and
- the movement of the sliding cylinder, and
- an automated run, which performs in the first part of the cycle at first the horizontal displacement and then the movement of the main cylinder and in the second part of the cycle at first the movement of the main cylinder and then the horizontal displacement.

2. An arrangement according to claim 1, **characterized in that** the control member (3) is arranged, when released, to stay in the intersections (8, 9, 10) between the main track (4) and the cross tracks (5, 6, 7), nonetheless in one location at a time, without returning on its own to another location on the main track, and from said locations (8, 9, 10) of the main track the control member can be moved along the cross track situated in the location in question.

3. An arrangement according to claim 1 or 2, **characterized in that** the control member (3) is on the cross tracks (5, 6, 7) arranged, when released, to return on its own to the intersection of the cross track in question and the main track (4).

4. Arrangement according to any of the previous claims, **characterized in that** the control device comprises two cross tracks (5, 6), the first (5) of which is arranged to control one or more main cylinders of the hook device and the second (6) is arranged to control the horizontal displacement of the hook device.

5. Arrangement according to any of the claims 1-3, **characterized in that** the control device comprises three cross tracks (5, 6, 7), the first (5) of which is arranged to control one or more main cylinders of the hook device, the second (6) is arranged to control the horizontal displacement of the hook device and the third (7) is arranged to control the automated run, which automated run performs in the first part of the cycle at first the horizontal displacement and then the movements of the main cylinder and in the second part of the cycle at first the movements of the main cylinder and then the horizontal displacement.

6. A method for controlling a demountable of a vehicle with a control device, in which method
- a control member (3), attached in a moveable way to the control device, is moved along a main track (4) and along at least two cross tracks (5, 6, 7), which cross tracks cross the main track, each cross track being used to control separate functions of the demountable,
- the position of the control member is converted into a control signal,
**characterized in that** the demountable is a hook device and that the cross tracks are used to control functions, which are selected from a group, which comprises
- the movement of the main cylinder,
- the horizontal displacement, which horizontal displacement comprises for example
- the movement of the hooking cylinder, and
- the movement of the sliding cylinder, and
- an automated run, which performs in the first part of the cycle at first the horizontal displacement and then the movement of the main cylinder and in the second part of the cycle at first the movement of the main cylinder and then the horizontal displacement.

7. Method according to claim 6, **characterized in that** the control member (3) is moved, in addition to the main track (4), also along two cross tracks (5, 6), the first (5) of which controls one or more main cylinders of the hook device and the second (6) controls the horizontal displacement of the hook device.

8. Method according to claim 6, **characterized in that** the control member (3) is moved, in addition to the main track (4), also along three cross tracks (5, 6, 7), the first (5) of which controls one or more main cylinders of the hook device, the second (6) controls the horizontal displacement of the hook device and the third (7) controls the automated run, which automated run performs in the first part of the cycle at first the horizontal displacement and then the movements of the main cylinder and in the second part of the cycle at first the movements of the main cylinder and then the horizontal displacement.

## Patentansprüche

1. Anordnung, die eine Lade-/Entladevorrichtung eines Fahrzeugs umfasst sowie ein Steuergerät einer Lade-/Entladevorrichtung eines Fahrzeugs, wobei das Steuergerät Folgendes umfasst:
- einen Rahmen (2),
- ein Steuerelement (3), das beweglich am Rahmen befestigt ist,
- Mittel zum Umwandeln der Position des Steuerelements in ein Steuersignal,
- eine Hauptführung (4) und
- mindestens zwei Querführungen (5, 6, 7), welche die Hauptführung kreuzen, wobei jede Querführung dafür angeordnet ist, eine separate Funktion der Lade-/Entladevorrichtung zu steuern, wobei das Steuerelement entlang der Führungen (4, 5, 6, 7) beweglich ist, **dadurch gekennzeichnet, dass** die Lade-/Entladevorrichtung ein Hakengerät ist und die zu steuernden Funktionen Folgendes umfassen:
- die Bewegung des Hauptzylinders,
- die horizontale Verlagerung, wobei die horizontale Verlagerung zum Beispiel Folgendes umfasst:
- die Bewegung des Hakenzylinders und
- die Bewegung des Gleitzylinders und
- einen automatisierten Durchlauf, der im ersten Teil des Zyklus zuerst die horizontale Verlagerung und dann die Bewegung des Hauptzylinders ausführt und im zweiten Teil des Zyklus zuerst die Bewegung des Hauptzylinders und dann die horizontale Verlagerung.

2. Anordnung nach Anspruch 1, **dadurch gekennzeichnet, dass** das Steuerelement (3) dafür angeordnet ist, nach dem Loslassen an den Kreuzungspunkten (8, 9, 10) zwischen der Hauptführung (4) und den Querführungen (5, 6, 7) zu verbleiben, jedoch jeweils nur an einer Stelle, ohne selbständig zu einer anderen Stelle in der Hauptführung zurückzukehren, wobei das Steuerelement von den Stellen (8, 9, 10) an der Hauptführung entlang der Querführung bewegt werden kann, die jeweils an dieser Stelle angeordnet ist.

3. Anordnung nach Anspruch 1 oder 2, **dadurch gekennzeichnet, dass** das Steuerelement (3) in den Querführungen (5, 6, 7) angeordnet ist, um nach dem Loslassen selbständig an den Kreuzungspunkt der jeweiligen Querführung und der Hauptführung (4) zurückzukehren.

4. Anordnung nach einem der vorhergehenden Ansprüche, **dadurch gekennzeichnet, dass** das Steuergerät zwei Querführungen (5, 6) aufweist, wobei die erste Querführung (5) dafür angeordnet ist, einen oder mehrere Hauptzylinder des Hakengerätes zu steuern, und wobei die zweite (6) dafür angeordnet ist, die horizontale Verlagerung des Hakengerätes zu steuern.

5. Anordnung nach einem der Ansprüche 1 bis 3, **dadurch gekennzeichnet, dass** das Steuergerät drei Querführungen (5, 6, 7) aufweist, wobei die erste Querführung (5) dafür angeordnet ist, einen oder mehrere Hauptzylinder des Hakengerätes zu steuern, die zweite (6) dafür angeordnet ist, die horizontale Verlagerung des Hakengerätes zu steuern, und die dritte (7) dafür angeordnet ist, den automatisierten Durchlauf zu steuern, wobei der automatisierte Durchlauf im ersten Teil des Zyklus zuerst die horizontale Verlagerung und dann die Bewegungen des Hauptzylinders ausführt und im zweiten Teil des Zyklus zuerst die Bewegungen des Hauptzylinders und dann die horizontale Verlagerung.

6. Verfahren zur Steuerung einer Lade-/Entladevorrichtung eines Fahrzeugs mit einem Steuergerät, wobei in dem Verfahren:
- ein Steuerelement (3), das beweglich am Steuergerät befestigt ist, entlang einer Hauptführung (4) und entlang von mindestens zwei Querführungen (5, 6, 7) bewegt wird, wobei die Querführungen die Hauptführung kreuzen und jede Querführung verwendet wird, um separate Funktionen der Lade-/Entladevorrichtung zu steuern,
- die Position des Steuerelements in ein Steuersignal umgewandelt wird,
**dadurch gekennzeichnet, dass** die Lade-/Entladevorrichtung ein Hakengerät ist und dass die Querführungen verwendet werden, um Funktionen zu steuern, die aus einer Gruppe ausgewählt werden, die Folgendes umfasst:
- das Bewegen des Hauptzylinders,
- das horizontale Verlagern, wobei das horizontale Verlagern zum Beispiel Folgendes umfasst:
- die Bewegung des Hakenzylinders und
- die Bewegung des Gleitzylinders und
- einen automatisierten Durchlauf, der im ersten Teil des Zyklus zuerst die horizontale Verlagerung und dann die Bewegung des Hauptzylinders ausführt und im zweiten Teil des Zyklus zuerst die Bewegung des Hauptzylinders und dann die horizontale Verlagerung.

7. Verfahren nach Anspruch 6, **dadurch gekennzeichnet, dass** das Steuerelement (3) zusätzlich zur Hauptführung (4) auch entlang zweier Querführungen (5, 6) bewegt wird, wobei die erste Querführung (5) einen oder mehrere Hauptzylinder des Hakengerätes steuert und die zweite (6) die horizontale Verlagerung des Hakengerätes steuert.

8. Verfahren nach Anspruch 6, **dadurch gekennzeichnet, dass** das Steuerelement (3) zusätzlich zur Hauptführung (4) auch entlang dreier Querführungen (5, 6, 7) bewegt wird, wobei die erste Querführung (5) einen oder mehrere Hauptzylinder des Hakengerätes steuert, die zweite (6) die horizontale Verlagerung des Hakengerätes steuert und die dritte (7) den automatisierten Durchlauf steuert, wobei der automatisierte Durchlauf im ersten Teil des Zyklus zuerst die horizontale Verlagerung und dann die Bewegungen des Hauptzylinders ausführt und im zweiten Teil des Zyklus zuerst die Bewegungen des Hauptzylinders und dann die horizontale Verlagerung.

## Revendications

1. Agencement, lequel comprend un élément démontable d'un véhicule et un dispositif de commande d'un élément démontable d'un véhicule, lequel dispositif comporte
- un bâti (2),
- un élément de commande (3), fixé de façon amovible en relation avec le bâti,
- des moyens pour convertir la position de l'élément de commande en un signal de commande,
- une piste principale (4), et
- au moins deux pistes transversales (5, 6, 7) qui croisent la piste principale, chaque piste transversale étant agencée en vue de commander une fonction distincte de l'élément démontable, pistes le long desquelles (4, 5, 6, 7) l'élément de commande peut se déplacer, **caractérisé en ce que** l'élément démontable est un dispositif à crochet et **en ce que** lesdites fonctions à commander comprennent
- le mouvement du cylindre principal,
- le déplacement horizontal, lequel déplacement horizontal comporte, par exemple,
- le mouvement du cylindre d'accrochage, et
- le mouvement du cylindre de coulissement, et
- un fonctionnement automatisé qui exécute, dans la première partie du cycle, d'abord le déplacement horizontal et, ensuite, le mouvement du cylindre principal et, dans la seconde partie du cycle, en premier lieu, le mouvement du cylindre principal et, ensuite, le déplacement horizontal.

2. Agencement selon la revendication 1, **caractérisé en ce que** l'élément de commande (3) est disposé, lorsqu'il est libéré, pour reposer dans les intersections (8, 9, 10) entre la piste principale (4) et les pistes transversales (5, 6, 7), néanmoins dans une position à la fois, sans revenir de sa position particulière vers une autre position sur la piste principale, et à partir desdites positions (8, 9, 10) de la piste principale, l'élément de commande peut être déplacé le long de la piste transversale située dans la position en question.

3. Agencement selon la revendication 1 ou 2, **caractérisé en ce que** l'élément de commande (3) est sur les pistes transversales (5, 6, 7) disposé, lorsqu'il est libéré, pour revenir sur sa piste particulière vers l'intersection de la piste transversale en question et de la piste principale (4).

4. Agencement selon l'une quelconque des revendications précédentes, **caractérisé en ce que** le dispositif de commande comprend deux pistes transversales (5, 6), dont la première (5) est disposée afin de commander un ou plusieurs cylindres principaux du dispositif à crochet et la seconde (6) est agencée pour commander le déplacement horizontal du dispositif à crochet.

5. Agencement selon l'une quelconque des revendications 1 à 3, **caractérisé en ce que** le dispositif de commande comprend trois pistes transversales (5, 6, 7), dont la première (5) est agencée pour commander un ou plusieurs cylindres principaux du dispositif à crochet, la deuxième (6) est agencée pour commander le déplacement horizontal du dispositif à crochet, et la troisième (7) est agencée pour commander le fonctionnement automatisé, lequel fonctionnement automatisé exécute, dans la première partie du cycle, d'abord le déplacement horizontal et, ensuite, les mouvements du cylindre principal et, dans la seconde partie du cycle, en premier lieu, les mouvements du cylindre principal et, ensuite, le déplacement horizontal.

6. Procédé pour commander un élément démontable d'un véhicule avec un dispositif de commande, procédé dans lequel
- un élément de commande (3), fixé d'une façon amovible au dispositif de commande, est déplacé le long d'une piste principale (4) et le long d'au moins deux pistes transversales (5, 6, 7), lesquelles pistes transversales croisent la piste principale, chaque piste transversale étant utilisée pour commander des fonctions distinctes de l'élément démontable,
- la position de l'élément de commande est convertie en un signal de commande,
**caractérisé en ce que** l'élément démontable est un dispositif à crochet et **en ce que** les pistes transversales sont utilisées pour commander des fonctions qui sont sélectionnées à partir d'un groupe qui comprend:
- le mouvement du cylindre principal,
- le déplacement horizontal, lequel déplacement horizontal comporte, par exemple,
- le mouvement du cylindre d'accrochage, et
- le mouvement du cylindre de coulissement, et
- une course automatisée, laquelle réalise, dans la première partie du cycle, en premier lieu, le déplacement horizontal et, ensuite, le mouvement du cylindre principal, et dans la seconde partie du cycle, en premier lieu le mouvement du cylindre principal et, ensuite, le déplacement horizontal.

7. Procédé selon la revendication 6, **caractérisé en ce que** l'élément de commande (3) est déplacé, en plus que sur la piste principale (4), également le long des deux pistes transversales (5, 6), dont la première commande un ou plusieurs cylindres principaux du dispositif à crochet et dont la seconde (6) commande le déplacement horizontal du dispositif à crochet.

8. Procédé selon la revendication 6, **caractérisé en ce que** l'élément de commande (3) est déplacé, en plus que sur la piste principale (4), également le long des trois pistes transversales (5, 6, 7), dont la première (5) commande un ou plusieurs cylindres principaux du dispositif à crochet, dont la deuxième (6) commande le déplacement horizontal du dispositif à crochet et dont la troisième (7) commande le fonctionnement automatisé, lequel fonctionnement automatisé exécute, dans la première partie du cycle, en premier lieu, le déplacement horizontal et, ensuite, les mouvements du cylindre principal et dans la seconde partie du cycle, en premier lieu, les mouvements du cylindre principal et, ensuite, le déplacement horizontal.
